# EUROPÄISCHE PATENTANMELDUNG

(11) **EP 4 556 730 A1**
(43) Veröffentlichungstag der Anmeldung: **21.05.2025**
(21) Anmeldenummer: 24207874.9
(22) Anmeldetag: 21.10.2024
(51) Int. Cl.: F16C 19/06, D06F 37/26, F16C 19/54, F16C 23/06, F16C 35/063, F16C 35/067

(54) **VERFAHREN ZUR MONTAGE EINER BAUGRUPPE FÜR EIN HAUSHALTSGERÄT ZUR PFLEGE VON WÄSCHESTÜCKEN, SOWIE HAUSHALTSGERÄT ZUR PFLEGE VON WÄSCHESTÜCKEN**

(30) Priorität: 15.11.2023 DE 102023211363
(71) Anmelder: BSH Hausgeräte GmbH, 81739 München (DE)
(72) Erfinder: Bittigau, Raik, 12524 Berlin (DE)

(57) **Zusammenfassung**

Ein Aspekt der Erfindung betrifft ein Verfahren zur Montage einer Baugruppe (3) für ein Haushaltsgerät (1) zur Pflege von Wäschestücken, aufweisend folgende Schritte:
a) Bereitstellen eines Lagergehäuses (9) einer Lageranordnung (4) der Baugruppe (3) und Bereitstellen eines dazu separaten ersten Radialwälzlagers (13) der Lageranordnung (4);
b) Befestigen des ersten Radialwälzlagers (13) der Lageranordnung (4) an dem Lagergehäuse (9), insbesondere einer Innenseite des Lagergehäuses (9), mit einer Presspassung;
c) Bereitstellen einer Unterbaugruppe (22) mit einem Wellenzapfen (7) der Lageranordnung (4) und einer Wäschetrommel (6) der Baugruppe (3);
d) axiales Ineinanderführen von der Unterbaugruppe (22) und dem Modul (23) aufweisend das Lagergehäuse (9) und das daran befestigte erste Radialwälzlager (13), so dass das erste Radialwälzlager (13) mit einer Presspassung an dem Wellenzapfen (7) befestigt wird;
e) nachfolgend auf Schritt d) axiales Einführen eines zweiten Radialwälzlagers (14) in einen beim Ineinanderführen erzeugten Aufnahmeraum (28) zwischen dem Wellenzapfen (7) und dem Lagergehäuse (9) derart, dass das zweite Radialwälzlager (14) als Loslager erzeugt wird. Ein weiterer Aspekt betrifft ein Haushaltsgerät (1).

## Beschreibung

Ein Aspekt der Erfindung betrifft ein Verfahren zur Montage einer Baugruppe für ein Haushaltsgerät zur Pflege von Wäschestücken. Ein weiterer Aspekt der Erfindung betrifft ein Haushaltsgerät zur Pflege von Wäschestücken.

Aus der DE 10 2015 223 301 A1 ist ein Wäschebehandlungsgerät bekannt. Dort ist eine Lageranordnung im Gerät vorgesehen. Diese weist ein Lagergehäuse auf, an dem ein Laugenbehälter angespritzt ist. Das Lagergehäuse ist mit einem Wellenzapfen mittels zwei separater Radialwälzlager verbunden. Beide Radialwälzlager sind mit einem jeweiligen Radialinnenring ausgebildet, der mit einer Lospassung auf den Wellenzapfen aufgebracht ist. Daher sind diese beiden Radialwälzlager zunächst als Loslager zu betrachten. Außenringe dieser beiden Radialwälzlager sind beide durch Presspassungen axial fixiert in einer Lagergehäusebohrung eingebracht. Damit sind diese Außenringe relativ zum Lagergehäuse unbeweglich angeordnet.

Bekannt ist auch eine so genannte schwimmende Lagerung, bei der beispielsweise zwischen der Welle und den Innenringen zweier Radialwälzlager jeweils eine Spielpassung vorgesehen ist. Bei einer solchen schwimmenden Lagerung, kann ein riemenscheibenseitiges Kugellager axial mit der Riemenscheibe nach dem Fügen verspannt sein, insbesondere der Innenring zwischen der Riemenscheibe und einem Wellenabsatz eingespannt sein. Dadurch wird das riemenscheibenseitige Lager zu einem Festlager und das trommelseitige Lager bleibt ein Loslager.

Allgemein ist es bei Loslagern der Fall, dass durch zunehmende mechanische Belastung des Systems die Spielpassung bzw. die Lospassung eines solchen Lagers, insbesondere auf Seite der Wäschetrommel, mit zunehmender Lebensdauer immer größer wird. Dadurch kann sich ein unerwünschtes Geräusch im Betrieb des Haushaltsgeräts ergeben, da diese Lagerung klappert. Ein zunehmender Verschleiß und dadurch entsprechende Geräuschentwicklung eines solchen Lagers, insbesondere eines trommelseitigen Lagers, durch höhere mechanische Belastung ist damit auch einhergehend.

Darüber hinaus ist die Herstellung solcher Haushaltsgeräte relativ aufwendig, um die jeweiligen Loslager spezifisch zu positionieren und die Komponenten miteinander zu verbauen.

Es ist Aufgabe der vorliegenden Erfindung, ein Verfahren zum Herstellen einer Baugruppe für ein Haushaltsgerät als auch ein Haushaltsgerät zur Pflege von Wäschestücken zu schaffen, bei welchem die Ausgestaltung eines Lagersystems im Hinblick auf Funktionsbeständigkeit verbessert ist und diesbezüglich eine hohe Montageeffizienz erreicht ist.

Diese Aufgabe wird durch ein Verfahren und ein Haushaltsgerät gemäß den unabhängigen Ansprüchen gelöst.

Ein Aspekt der Erfindung betrifft ein Verfahren zur Montage einer Baugruppe für ein Haushaltsgerät zur Pflege von Wäschestücken. Das Verfahren weist insbesondere folgende Schritte auf:
a) Insbesondere Bereitstellen eines Lagergehäuses einer Lageranordnung der Baugruppe und Bereitstellen eines dazu separaten ersten Radialwälzlagers der Lageranordnung;
b) Insbesondere Befestigen des ersten Radialwälzlagers der Lageranordnung an dem Lagergehäuse, insbesondere einer Innenseite des Lagergehäuses, mit einer Presspassung;
c) Insbesondere Bereitstellen einer Unterbaugruppe mit einem Wellenzapfen der Lageranordnung und einer Wäschetrommel der Baugruppe;
d) Insbesondere, in Richtung einer Wellenachse des Wellenzapfens betrachtet, axiales Ineinanderführen von der Unterbaugruppe und dem Modul aufweisend das Lagergehäuse und das daran befestigte erste Radialwälzlager, so dass das erste Radialwälzlager mit einer Presspassung an dem Wellenzapfen befestigt wird;
e) nachfolgend auf Schritt d) axiales Einführen eines zweiten Radialwälzlagers in einen beim Ineinanderführen erzeugten Aufnahmeraum zwischen dem Wellenzapfen und dem Lagergehäuse derart, dass das zweite Radialwälzlager als Loslager erzeugt wird.

Durch ein solches Verfahren ist eine vorteilhafte Konfiguration eines Haushaltsgeräts mit einer solchen Baugruppe ermöglicht. Es ist nämlich erreicht, dass auch fertigungstechnisch durch effiziente Art und Weise die Baugruppe erzeugt werden kann und in dem Zusammenhang auch eine ganz spezifische Lageranordnung beziehungsweise ein Lagersystem erzeugt wird. Denn die Baugruppe ist in dem Zusammenhang mit zwei unterschiedlichen Lagertypen konzipiert. Sie weist in dem Zusammenhang ein Festlager auf, welches durch das erste Radialwälzlager gebildet wird. Daher ist bei dieser Baugruppe ein trommelseitiges erste Radialwälzlager als Festlager ausgebildet. Dem gegenüber ist das zweite Radialwälzlager ein Loslager. Dieses ist dann das riemenscheibenseitige Radialwälzlager.

Durch diese Konfiguration mit unterschiedlichen Lagertypen, die dann auch noch ortsspezifisch angeordnet sind, nämlich einerseits trommelseitig und andererseits riemenscheibenseitig, lassen sich die Komponenten der Baugruppe besonders vorteilhaft zueinander anordnen und lagern. Die Geräuschbildung, wie sie oben erläutert wurde, wird deutlich reduziert. Auch der diesbezügliche Verschleiß über die Lebensdauer hin gesehen kann reduziert werden, sodass gerade das im Stand der Technik erläuterte, mit fortschreitender Lebensdauer, auftretende Klappern der Lagerung vermeidbar ist.

Ausgehend von einem solchen Konzept einer spezifischen Lageranordnung ist auch das vorgeschlagene Verfahren im Hinblick auf die Abläufe und wann welche Komponenten bereitgestellt und miteinander verbunden werden, insbesondere auch welche Unterbaugruppen und Module vorkonfiguriert werden und dann zusammengesetzt werden, von besonderer Vorteilhaftigkeit. Denn genau diese Vorgehensweise bei der Montage ermöglicht auch gerade für eine solche Lageranordnung effiziente Fertigungsabläufe. Schnelle Bereitstellung, schnelle Fügung und ein schnelles Ineinanderübergehen der Verfahrensschritte ist dadurch ermöglicht. Besonders vorteilhaft ist in dem Zusammenhang dann auch, dass der Automatisierungsgrad der Fertigung besonders hoch ist, insbesondere im Vergleich zu herkömmlichen Montageverfahren aus dem Stand der Technik deutlich erhöht werden kann.

In einem Ausführungsbeispiel wird im Schritt e) ein Außenring des zweiten Radialwälzlagers mit einer, insbesondere radialen, Spielpassung zum radial außenliegend dazu angeordneten Lagergehäuse angeordnet, sodass das Loslager gebildet wird. Es wird also bei dieser Spezifikation ein ganz individuelles Bauteil dieses zweiten Radialwälzlagers, nämlich der radial außenliegende Außenring, mit dieser Spielpassung zum Lagergehäuse, welches dazu benachbart ist, angeordnet. Auch dadurch werden die oben genannten Vorteile zusätzlich unterstützt.

In einem Ausführungsbeispiel wird in Schritt e) ein Innenring des zweiten Radialwälzlagers mit einer, insbesondere axialen, Spielpassung an dem radial dazu innenliegend angeordneten Wellenzapfen befestigt. Damit wird eine weitere spezifische Komponente dieses zweiten Radialwälzlagers besonders vorteilhaft positioniert, insbesondere auf den Wellenzapfen lose aufgebracht.

Vorzugsweise ist dieser Innenring des zweiten Radialwälzlagers mit einer Verspannvorrichtung in axialer Richtung verspannt. Insbesondere kann dazu eine Riemenscheibe vorgesehen sein, mit welcher diese Verspannung erzeugbar ist. Diese Riemenscheibe kann axial direkt an dem Innenring anliegen. Dadurch ist ein besonders spezifisches und hochfunktionelles Loslager konzipiert.

In einem Ausführungsbeispiel wird in Schritt b) ein Außenring des ersten Radialwälzlagers mit einer Presspassung an dem radial dazu außenliegenden Lagergehäuse befestigt. Insbesondere wird in Schritt b) ein Innenring des ersten Radialwälzlagers mit einer Presspassung an dem radial dazu innenliegenden Wellenzapfen befestigt. Damit sind diese beiden radial unterschiedlich positionierten Ringe des ersten Radialwälzlagers jeweils für sich betrachtet mit einer Presspassung zu wiederum jeweils unterschiedlichen weiteren Komponenten befestigt, insbesondere direkt daran befestigt. Dadurch ist das Festlager gebildet.

Gerade diese Konfiguration, bei welcher in axialer Richtung des Wellenzapfens betrachtet das riemenscheibenseitige Radialwälzlager das Loslager bildet und das wäschetrommelseitige erste Radialwälzlager das Festlager bildet, trägt in besonders vorteilhafter Weise dazu bei, dass die oben genannten Nachteile, die sich insbesondere auch im Laufe der Lebensdauer des Haushaltsgeräts einstellen, zumindest deutlich reduziert werden können.

In einem Ausführungsbeispiel wird in Schritt a) das erste Radialwälzlager mit einem daran angeordneten Dichtring in einer Montageposition gehalten und das Lagergehäuse, insbesondere mit einem daran befestigten Laugenbehälter des Haushaltsgeräts, axial auf das erste Radialwälzlager aufgeschoben, sodass die Presspassung erzeugt wird. Insbesondere wird hier vorgesehen, dass ein radiales Außenmaß des ersten Radialwälzlagers, insbesondere eines Außenrings, größer ist als ein Innenmaß des Lagergehäuses. Damit wird beim axialen Aufeinanderschieben dieser Komponenten diese Presspassung besonders effizient und hochfunktionell gebildet.

In einem Ausführungsbeispiel wird in Schritt d) mit einem Hubdorn einer Fertigungsanlage in axialer Richtung in einen Innenring des ersten Radialwälzlagers herangefahren, sodass in diese Axialrichtung nur der Innenring mit dem Hubdorn kontaktiert wird. Das oben genannte Modul wird dann durch axiales Bewegen des Hubdorns mit der Unterbaugruppe ineinandergeführt. Gerade dieser Fertigungsschritt ist auch besonders vorteilhaft, da der Hubdorn auch in einer beengten Umgebung, wie sie bei diesem Fertigungsschritt auftritt, effizient genutzt werden kann. Er kann somit in vorteilhafter Weise zwischen das Modul und die Unterbaugruppe eingreifen beziehungsweise bei einem Ineinanderführen darin positioniert werden. Indem andererseits der Hubdorn dann auch konkret nur an diesem Innenring angreift, werden Wälzkörper, wie beispielsweise Kugeln, dieses ersten Radialwälzlagers als auch ein Außenring dieses ersten Radialwälzlagers nicht beeinträchtigt. Insbesondere erfolgt dann diesbezüglich keine Kraftbeaufschlagung auf diese genannten Komponenten, sodass eine unerwünschte Beeinträchtigung dieses spezifischen Radialwälzlagers bei diesem Fertigungsschritt vermieden wird. Gerade bei diesem Schritt, bei welchem dann auch die Presspassung zwischen diesem Innenring und dem Wellenzapfen erzeugt wird, lässt sich durch diesen Hubdorn, dessen Positionierung, dessen Führung und dessen sehr begrenzten lokalen Angreifen an diesem ersten Radialwälzlager eine besonders exakte Positionierung, Führung und Erzeugung dieser Presspassung erreichen. Die dabei erforderlichen auftretenden Kräfte werden genau an die benötigten Komponenten übertragen, sodass auch andere Bauteile, insbesondere des ersten Radialwälzlagers, dadurch nicht beeinträchtigt werden.

In einem Ausführungsbeispiel wird das erste Radialwälzlager als trommelseitiges Radialwälzlager montiert. Dies bedeutet, dass es in axialer Richtung und somit in Richtung der Längsachse des Wellenzapfens, die auch die Längsachse der Baugruppe bildet, näher zu einer Wäschetrommel der Baugruppe angeordnet ist, als das zweite Radialwälzlager.

In einem Ausführungsbeispiel wird nach dem Durchführen des Schritts e) eine Riemenscheibe der Baugruppe an dem Wellenzapfen befestigt. Insbesondere wird diese Riemenscheibe benachbart zu dem zweiten Radialwälzlager fest montiert. Dies derart, dass das zweite Radialwälzlager als ein riemenscheibenseitiges Radialwälzlager angeordnet wird. Auch diese örtliche Spezifikation ist dahingehend zu verstehen, dass das Radialwälzlager in axialer Richtung betrachtet näher zu der Riemenscheibe angeordnet ist, als das erste Radialwälzlager. Insbesondere wird das zweite Radialwälzlager, insbesondere ein Innenring des zweiten Radialwälzlagers, in axialer Richtung mit der Riemenscheibe verspannt.

Die so fertiggestellte Baugruppe wird dann zur weiteren Montage eines Haushaltsgeräts bereitgestellt. In dem Zusammenhang ist ein weiterer Aspekt der Erfindung ein Verfahren zur Montage eines Haushaltsgeräts zur Pflege von Wäschestücken. Bei diesem Verfahren wird diese gemäß dem oben genannten Verfahren gefertigte Baugruppe weiter verbaut, insbesondere mit anderen weiteren Komponenten des Haushaltsgeräts verbunden.

Insbesondere wird in einem Ausführungsbeispiel ein Riemen eines Riemenantriebs des Haushaltsgeräts mit dieser Riemenscheibe der Baugruppe verspannt. Dies erfolgt derart, dass der Außenring des zweiten Radialwälzlagers zusätzlich an das radial außenliegend dazu angeordnete Lagergehäuse und nur über einen Azimutalabschnitt kleiner einem vollen Umlauf um die Wellenachse des Wellenzapfens angedrückt wird. Durch dieses Verspannen des Riemens erfolgt daher eine Krafterzeugung, die senkrecht zur Wellenachse wirkt, sodass die Baugruppe minimal aus der Zentrallage herausgezogen wird, sodass diese zusätzliche Positionierung des Außenrings aber nur an einem Teilabschnitt der gesamten Umlauflänge fester an der Wellenachse sitzt, als an anderen Stellen. Damit wird quasi eine zusätzliche mechanische radiale Andrückverbindung geschaffen, wodurch ein relatives Drehen dieses Außenrings zu dem Lagergehäuse vermieden wird. Dennoch bleibt das Loslager diesbezüglich weiterhin bestehen und erfüllt die entsprechende Funktion eines Loslagers, insbesondere im Vergleich zu einem Festlager.

Vorteilhaft ist dieses Ausführungsbeispiel insbesondere auch dahingehend, dass im Laufe der Lebensdauer die Spielpassung nicht zu groß wird. Daher wird durch dieses genannte vorteilhafte Ausführungsbeispiel das Loslager zusätzlich unterstützt, sodass ein Klappern des Lagers im Laufe der Lebensdauer auch dadurch nochmals verbessert vermieden wird.

Ein weiterer Aspekt der Erfindung betrifft ein Haushaltsgerät zur Pflege von Wäschestücken. Das Haushaltsgerät weist eine Lageranordnung auf. Es weist darüber hinaus eine Wäschetrommel sowie eine dazu separate Riemenscheibe auf. Die Wäschetrommel und die Riemenscheibe sind an einem Wellenzapfen der Lageranordnung befestigt, insbesondere direkt daran befestigt. Die Lageranordnung weist ein erstes Radialwälzlager und ein dazu separates zweites Radialwälzlager auf. Das erste Radialwälzlager ist in axialer Richtung des Wellenzapfens betrachtet näher zur Wäschetrommel angeordnet, als das zweite Radialwälzlager. Das zweite Radialwälzlager ist in axialer Richtung des Wellenzapfens betrachtet näher zur Riemenscheibe angeordnet, als das erste Radialwälzlager. Das riemenscheibenseitige zweite Radialwälzlager ist ein Loslager. Das trommelseitige erste Radialwälzlager ist ein Festlager.

Die diesbezüglich erreichbaren Vorteile wurden bereits oben erläutert.

In einem Ausführungsbeispiel weisen die Radialwälzlager jeweils einen Innenring und einen dazu radial weiter außen liegenden Außenring auf. Dazwischen sind jeweils kugelförmige Wälzkörper der Radialwälzlager angeordnet. In einem Ausführungsbeispiel ist der Außenring des riemenscheibenseitigen zweiten Radialwälzlagers mit einer Spielpassung zu einem Lagergehäuse der Lageranordnung angeordnet. Insbesondere dadurch ist das Loslager gebildet beziehungsweise funktionell charakterisiert.

In einem Ausführungsbeispiel weisen die Radialwälzlager jeweils einen Innenring und einen radial dazu betrachtet weiter außen angeordneten Außenring auf. Dazwischen sind jeweils kugelförmige Wälzkörper angeordnet. Der Innenring des riemenscheibenseitigen zweiten Radialwälzlagers ist mit einer Spielpassung an dem Wellenzapfen angeordnet. Insbesondere das zweite Radialwälzlager, insbesondere der Innenring des zweiten Radialwälzlagers, in axialer Richtung mit der Riemenscheibe verspannt. Durch diese Vorspannung ist der Innenring axial positionell gehalten.

Die Radialwälzlager weisen jeweils einen Innenring und einen Außenring auf und weisen dazwischen angeordnete kugelförmige Wälzkörper auf. Der Außenring des trommelseitigen ersten Radialwälzlagers ist mit einer Presspassung zu einem Lagergehäuse der Lageranordnung angeordnet. Der Innenring des trommelseitigen ersten Radialwälzlagers ist mit einer Presspassung an dem Wellenzapfen angeordnet, sodass durch diese Presspassungen das Wählfestlager gebildet ist bzw. funktionell charakterisiert ist.

In einem Ausführungsbeispiel weist das Haushaltsgerät einen Riemenantrieb auf. Dieser umfasst einen Riemen, der einerseits mit einem Antriebsmotor des Haushaltsgeräts gekoppelt ist, andererseits mit der Riemenscheibe gekoppelt ist.

Vorteile dieses Konzepts ergeben sich auch durch eine Überlagerung einer Umfangslast und einer Punktlast auf das Loslager, insbesondere den Außenring dieses zweiten Radialwälzlagers. Eine Punktlast ist dabei als Flächenlast konzipiert. Die Punktlast beschreibt eine statische Last, die beispielsweise durch das Gewicht gebildet ist. Die Umfangslast ist im Unterschied dazu eine Last, die beim Drehen der Wäschetrommel auftritt. Das ist beispielsweise durch eine Unwuchtlast charakterisiert.

Gerade das oben erläuterte Ausführungsbeispiel mit der senkrecht zur Wellenachse des Wellenzapfens mit dem vorgespannten Riemen erzeugten Riemenkraft ist das Drehen des Außenrings des Loslagers, also des zweiten Radialwälzlagers, auch unter dieser Umgangslast durch Unwucht verhindert. Durch das vorgeschlagene Konzept ist gerade der üblicherweise sehr hoch beanspruchte Innenring des trommelseitige Radialwälzlagers verbessert, da dieser durch Presspassung befestigt ist, insbesondere das gesamte erste Radialwälzlager als Festlager konzipiert ist. Dadurch kann eine besonders geräuscharme Ausgestaltung des Haushaltsgeräts, auch über die Lebensdauer, ermöglichst werden.

Ein weiterer Aspekt der Erfindung betrifft eine Fertigungsanlage zum Fertigen einer Baugruppe für ein Haushaltsgerät zur Pflege von Wäschestücken. Die Fertigungsanlage ist dazu eingerichtet, ein Verfahren, wie es oben erläutert wurde, durchzuführen.

Insbesondere weist die Fertigungsanlage dazu entsprechende Werkzeuge und Vorrichtungen auf.

Ein weiterer Aspekt der Erfindung betrifft eine Baugruppe für ein Haushaltsgerät zur Pflege von Wäschestücken, erhältlich durch ein Verfahren gemäß dem oben genannten Aspekt oder einem vorteilhaften Ausführungsbeispiel davon.

Ausführungsbeispiele der Erfindung werden nachfolgend anhand schematischer Zeichnungen näher erläutert. Es zeigen:
- Fig. 1: Eine schematische Frontansicht eines Ausführungsbeispiels eines erfindungsgemäßen Haushaltsgeräts zur Pflege von Wäschestücken;
- Fig. 2: eine Schnittdarstellung durch einen Teilbereich einer Baugruppe des Haushaltsgeräts gemäß Fig. 1;
- Fig. 3: eine Schnittdarstellung von Teilkomponenten der Baugruppe gemäß Fig. 2 in einem ersten Montagezustand der Baugruppe;
- Fig. 4: eine Schnittdarstellung von Teilkomponenten der Baugruppe gemäß Fig. 2 in einer zu Fig. 3 folgenden zweiten Montagephase;
- Fig. 5: eine Darstellung der Komponenten gemäß Fig. 4 in einer zu Fig. 4 nachfolgenden Montagephase;
- Fig. 6: eine Schnittdarstellung von Teilkomponenten der Baugruppe gemäß Fig. 2 in einer zu Fig. 5 nachfolgenden Montagephase;
- Fig. 7: eine Schnittdarstellung der Komponenten gemäß Fig. 6 in einer Montagephase der Baugruppe, die zeitlich nachfolgend zu Fig. 6 ist; und
- Fig. 8: eine Schnittdarstellung der Komponenten der Baugruppe gemäß Fig. 2, wobei hier eine Montagephase gezeigt ist, die zeitlich auf den Fertigungszustand gemäß Fig. 7 folgt.

In den Figuren werden gleiche oder funktionsgleiche Elemente mit den gleichen Bezugszeichen versehen.

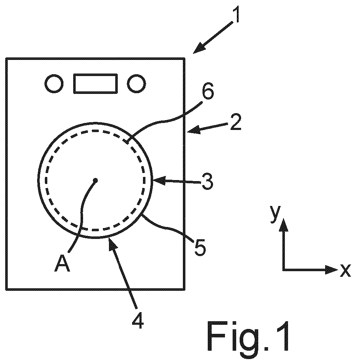

In Fig. 1 ist in einer schematischen Darstellung eine Frontansicht eines Haushaltsgeräts 1 zur Pflege von Wäschestücken gezeigt. Das Haushaltsgerät 1 ist eine Waschmaschine. Das Haushaltsgerät 1 weist ein Gehäuse 2 auf. In dem Gehäuse 2 ist eine Baugruppe 3 angeordnet. Die Baugruppe 3 weist eine Lageranordnung 4 auf. Die Baugruppe 3 weist einen Laugenbehälter 5 auf. Darüber hinaus weist die Baugruppe 3 eine Wäschetrommel 6 auf. Die Wäschetrommel 6 ist in dem Laugenbehälter 5 aufgenommen. Die Wäschetrommel 6 kann um eine Achse A, die senkrecht zur Figurenebene orientiert ist, gedreht werden.

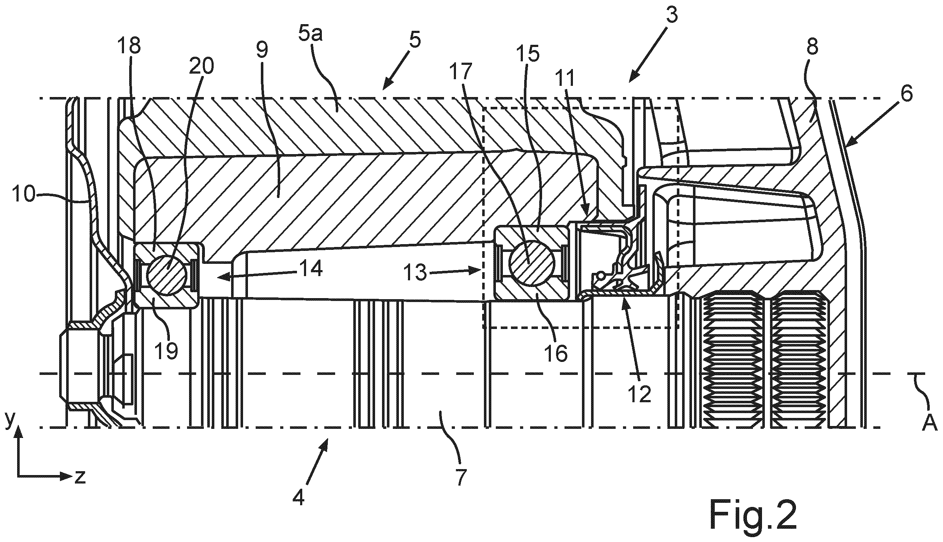

In Fig. 2 ist in einer Vertikalschnittdarstellung ein Teilbereich eines Ausführungsbeispiels der Baugruppe 3 gezeigt. Die Schnittebene ist hier durch die Höhenrichtung (y-Richtung) und die Tiefenrichtung (z-Richtung) des Haushaltsgeräts 1 aufgespannt. Die Baugruppe 3 ist im gezeigten Ausführungsbeispiel im zusammengebauten Zustand gezeigt. Die Lageranordnung 4 weist einen Wellenzapfen 7 auf. Durch diesen ist auch die Achse A definiert. Darüber hinaus ist in Fig. 2 auch ein Tragarm 8 gezeigt. Eine Wand 5a des Laugenbehälters 5 ist ebenfalls dargestellt. Des Weiteren ist ein Lagergehäuse 9 der Lageranordnung 4 dargestellt. Insbesondere ist das Lagergehäuse 9 mit dem Laugenbehälter 5 verbunden, insbesondere diesbezüglich umspritzt. Das Lagergehäuse 9 kann beispielsweise ein Gussbauteil sein. Des Weiteren ist in Fig. 2 eine Riemenscheibe 10 gezeigt. Die Riemenscheibe 10 ist drehfest mit dem Wellenzapfen 7 verbunden. Entsprechend ist auch die Wäschetrommel 6 drehfest mit dem Wellenzapfen 7 verbunden. An dem Tragarm 8 ist die Wäschetrommel 6 angeordnet. Dieser Tragarm 8 ist insbesondere an dem Wellenzapfen 7 angeordnet, insbesondere direkt daran fest angeordnet.

Darüber hinaus ist in Fig. 2 eine Dichtung 11 gezeigt. Diese ist als Dichtring ausgebildet. Des Weiteren ist ein Metallteil 12 dargestellt. Dieses Metallteil 12 ist insbesondere umlaufend an der Außenseite des Wellenzapfens 7 angeordnet, insbesondere direkt angeordnet. Die Dichtung 11 ist in axialer Richtung auf gleicher Lage wie das dazu separate Metallteil 12 angeordnet. Es ist radial weiter außen liegend als das Metallteil 12 angeordnet, insbesondere jedoch an diesem anliegend angeordnet.

Darüber hinaus ist in Fig. 2 ein erstes Radialwälzlager 13 der Lageranordnung 4 dargestellt. In axialer Richtung und somit in Richtung der Achse A betrachtet ist dieses erste Radialwälzlager 13 ein trommelseitiges Lager. Darüber hinaus weist die Lageranordnung ein zweites Radialwälzlager 14 auf. Dieses zweite Radialwälzlager 14 ist riemenscheibenseitig angeordnet. Es ist ein riemenscheibenseitiges Lager.

Das erste Radialwälzlager 13 ist als Festlager ausgebildet. Insbesondere ist es mit einer Presspassung an der Außenseite des Wellenzapfens 7 direkt angeordnet und mit einer Presspassung direkt an einer Innenseite des Lagergehäuses 9 angeordnet. Das erste Radialwälzlager 13 weist einen Außenring 15 und einen Innenring 16 auf. Dazwischenliegend sind kugelförmige Wälzkörper 17 angeordnet. Der Außenring 15 ist mit einer Presspassung mit dem Lagergehäuse 9 direkt verbunden. Der Innenring 16 ist mit einer Presspassung mit der Außenseite des Wellenzapfens 7 fest verbunden. Wie darüber hinaus zu erkennen ist, ist im Ausführungsbeispiel das Metallteil 12 als axialer Anschlag für dieses erste Radialwälzlager 13 ausgebildet. Durch die Dichtung 11 ist der Bereich benachbart zu dem ersten Radialwälzlager 13 abgedichtet.

Das zweite Radialwälzlager 14 ist als Loslager ausgebildet. Insbesondere ist in dem Zusammenhang vorgesehen, dass dieses zweite Radialwälzlager 14 mit einer Spielpassung mit dem Lagergehäuse 9 gekoppelt ist. Insbesondere ist es mit einer Spielpassung an dem Wellenzapfen 7 angeordnet. Das zweite Radialwälzlager 14 weist einen Außenring 18 und einen Innenring 19 auf. Dazwischen sind kugelförmige Wälzkörper 20 angeordnet. Im Ausführungsbeispiel ist also der Innenring 19 mit einer Spielpassung an der Außenseite des Wellenzapfens 7 befestigt. Zwischen dem Außenring 18 und dem Lagergehäuse 9 ist eine Spielpassung ausgebildet.

In Fig. 2 nicht gezeigt ist ein Riemen eines Riemenantriebs des Haushaltsgeräts 1. Der Riemen ist mit der Riemenscheibe 10 und mit einem Antriebsmotor des Haushaltsgeräts 1 gekoppelt. Mit der Riemenscheibe 10 ist der Innenring 19 in axialer Richtung vorgespannt angeordnet. Der Riemen ist so gespannt, dass er senkrecht zur Achse A eine Kraft erzeugt, mit welcher das zweite Radialwälzlager 14 nur über einen Azimutalabschnitt kleiner der vollen Umlauflänge um die Achse A an das Lagergehäuse 9 angedrückt anliegt.

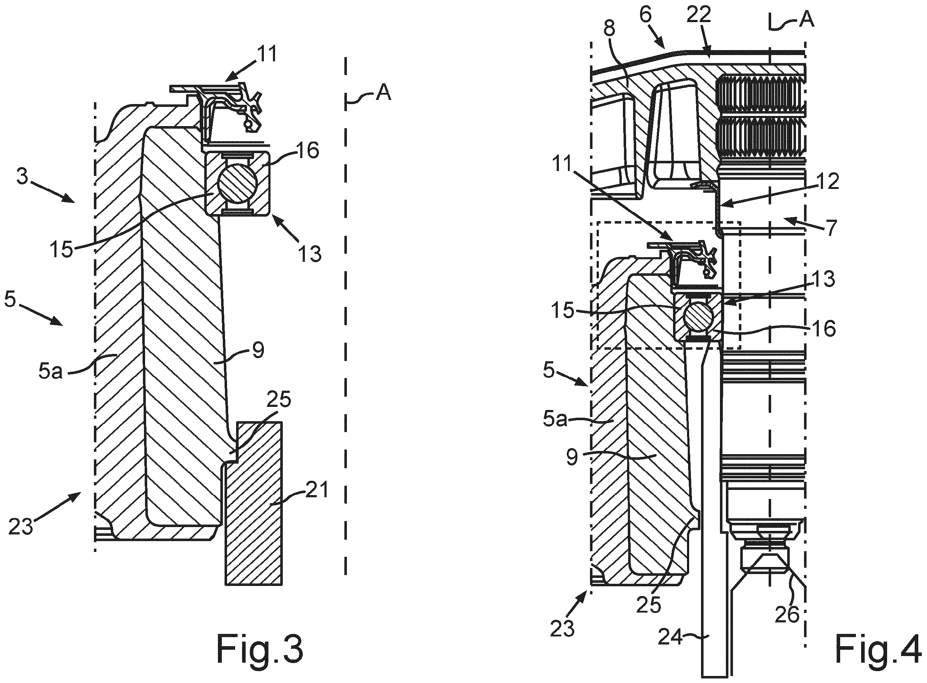

Im Weiteren wird die Montage der Baugruppe 3 näher erläutert. Dazu ist in Fig. 3 eine Montagephase gezeigt, bei welcher das Lagergehäuse 9 mit dem daran unlösbar verbundenen Laugenbehälter 5 bereits gefertigt ist und bereitgestellt ist. In Fig. 3 ist darüber hinaus auch bereits eine Montagephase gezeigt, bei welchem das erste radiale Wälzlager 13 mit seinem Außenring 15 in einer Presspassung an dem Lagergehäuse 9 angeordnet ist. Dies ist vorzugsweise dadurch erzeugt, dass in axialer Richtung das erste Radialwälzlager 13 und das Lagergehäuse 9 mit dem Laugenbehälter 5 ineinandergeschoben sind. Aufgrund der radialen Ausgestaltung des Außenrings 15 mit einem Übermaß zu einem Innenmaß des Lagergehäuses 9 wird bei diesem Zusammenfügen die Presspassung erzeugt. Darüber hinaus ist in Fig. 3 auch bereits der Zustand gezeigt, bei welchem die Dichtung 11 angeordnet ist.

Zum Erreichen dieses in Fig. 3 gezeigten Montagezwischenzustands werden mit einem nicht gezeigten Werkzeug einer Fertigungsanlage das erste Radialwälzlager 13 und der Dichtring 11 aufgenommen. Insbesondere ist dabei auch eine Positionsfixierung und - zentrierung vorgesehen. Darüber hinaus wird mit einem Aufnahmewerkzeug 21 der Fertigungsanlage, welches in Fig. 3 schematisch gezeigt ist, in axialer Richtung in das Lagergehäuse 9 eingefahren. Aufgrund der radial überlappenden Anschläge sowohl einerseits eines Anschlags an dem Werkzeug 21, andererseits eines Anschlags 25 an dem Lagergehäuse 9, koppeln das Werkzeug 21 und dieses Lagergehäuse 9, sodass im Weiteren durch axiales Bewegen des Werkzeugs 21 das Lagergehäuse 9 mit dem Laugenbehälter 5 an das erste Radialgehäuse 13 herangeführt wird und dieses axiale Ineinanderführen mit dem oben bereits erläuterten Verpressen des Außenrings 15 in dem Lagergehäuse 9 vollzogen wird. Diesbezüglich ist, wie bereits erwähnt, in Fig. 3 der bereits in dem Zusammenhang gefügte Zustand gezeigt.

Ausgehend von diesem Montagezwischenzustand wird dann in einer weiteren nachfolgenden Montagephase eine Unterbaugruppe 22 bereitgestellt. Diese Unterbaugruppe 22 weist den Wellenzapfen 7 auf. Darüber hinaus ist die Wäschetrommel 6 mit dem Tragarm 8 bereits mit diesem Wellenzapfen 7 verbunden. Diesbezüglich sind dann auch die Wäschetrommel 6 und der Tragarm 8 vorzugsweise Bestandteil dieser Unterbaugruppe 22. Zum Fügen dieser Unterbaugruppe 22 mit dem Modul 23, wie es in Fig. 3 erläutert wurde, wird ein Hubdorn 24 der Fertigungsanlage genutzt. Dieser Hubdorn 24 kontaktiert in axialer Richtung nur den Innenring 16 des ersten Radialgehäuses 13, wie dies in Fig. 4 zu erkennen ist. Darüber hinaus liegt dieser dünne Hubdorn 24 in radialer Richtung seitlich an dem bereits erwähnten, radial nach innen ragenden Anschlag 25 des Lagergehäuses 9 an. Dadurch ist eine exakte Ausrichtung dieses Moduls 23, insbesondere in zentrierter axialer Lage, unterstützt. In einem Ausführungsbeispiel ist vorgesehen, dass mit einer schematisch gezeigten Einheit 26 der Fertigungsanlage der Wellenzapfen 7 positionell fixiert und zentriert wird. In Fig. 4 ist dabei bereits ein Montagezustand gezeigt, bei welchem in axialer Richtung die Unterbaugruppe 22 und das Modul 23 bereichsweise ineinander geführt sind. Vor diesem Zwischenzustand gemäß Fig. 4 sind diese Unterbaugruppe 22 und das Modul 23 in axialer Richtung getrennt und nicht überlappend.

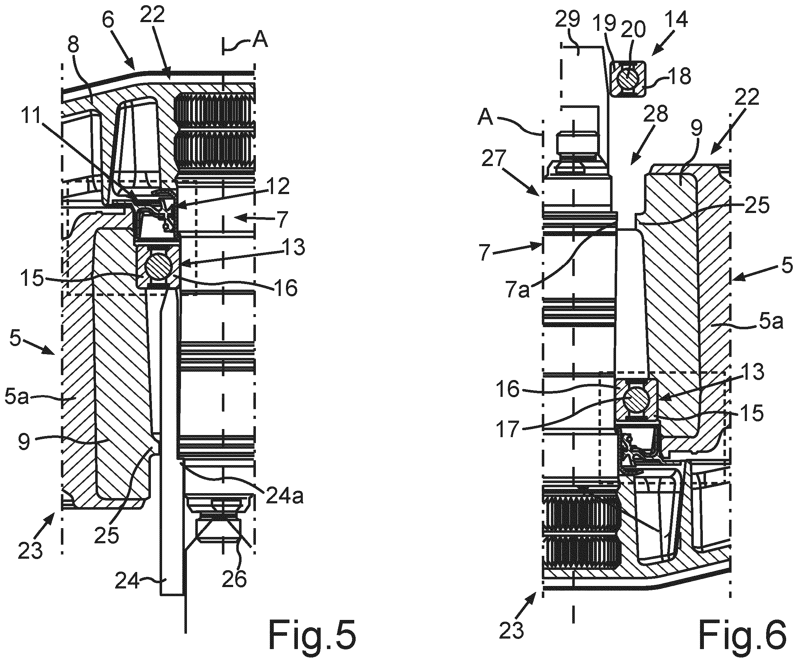

Ausgehend von dem in Fig. 4 gezeigten Zustand wird ein weiteres Ineinanderführen der Unterbaugruppe 22 und des Moduls 23 durchgeführt, bis der in Fig. 5 gezeigte weitere Montagezwischenzustand erreicht ist. Dort ist gezeigt, dass das erste Radialwälzlager 13 auch mit der Außenseite des Wellenzapfens 7 fest verbunden ist und in der Endposition angeordnet ist. Dort ist also auch der Innenring 16 mit einer Presspassung mit dem Wellenzapfen 7 verbunden. Darüber hinaus ist auch zu erkennen, dass diese axiale Position durch das Metallteil 12 in einem Ausführungsbeispiel vorgegeben ist und diesbezüglich das Metallteil 12 auch als Axialanschlag für dieses erste Radialwälzlager 13 dient.

In diesem Zustand gemäß Fig. 5 ist also das erste Radialwälzlager 13 als Festlager zwischen dem Lagergehäuse 9 und dem Wellenzapfen 7 gebildet. Darüber hinaus ist auch zu erkennen, dass der Wellenzapfen 7 einen radial erhabenen Anschlag 7a aufweist. Dieser ist mit einem, insbesondere mit einer Stufe ausgebildeten, Teilbereich 24a des Hubdorns 24 radial überlappend. Wie in Fig. 5 auch zu erkennen ist, wird durch diesen axialen Anschlag die axiale Verschiebebewegung des Hubdorns 24 begrenzt. Damit ist gemäß der Darstellung in Fig. 5 zusätzlich auch die axiale Endlage zwischen der Unterbaugruppe 22 und dem Modul 23 vorgegeben.

In Fig. 6 ist in dem Zusammenhang der Zwischenmontagezustand gemäß Fig. 5 zwischen der Unterbaugruppe 22 und dem Modul 23 gezeigt, wobei hier der Hubdorn 24 bereits entfernt ist. Darüber hinaus ist in Fig. 6 diese Anordnung 27 mit dem Modul 23 und der Unterbaugruppe 22 in umgedrehten Zustand gezeigt. Dies bedeutet, dass in einem Ausführungsbeispiel zur weiteren Montage der Baugruppe 3 die Anordnung 27 um 180° im Vergleich zu Fig. 5 gedreht wird. Wie darüber hinaus in Fig. 6 auch zu erkennen ist, ist durch die bisherige Montage an einem Ende dieser Anordnung 27 ein axial offener Aufnahmeraum 28 zwischen dem Wellenzapfen 7 und dem Lagergehäuse 9 gebildet. Dieser Aufnahmeraum 28 ist bestimmungsgemäß zur Aufnahme des bereits erläuterten weiteren zweiten Radialwälzlagers 14 vorgesehen. Dieses in Fig. 6 bereits bereitgestellte zweite Radialwälzlager 14 wird durch ein weiteres Hilfswerkzeug 29 der Fertigungsanlage in den Aufnahmeraum 28 von oben her kommend eingeführt. Aufgrund der diesbezüglichen Maße und der bereits erfolgten Erläuterung in Fig. 2 wird dieses zweite Radialwälzlager 14 als Loslager gebildet. Insbesondere ist dabei zwischen dem Lagergehäuse 9 und dem zweiten Radialwälzlager 14, insbesondere dessen Außenring 18, eine Spielpassung erzeugt.

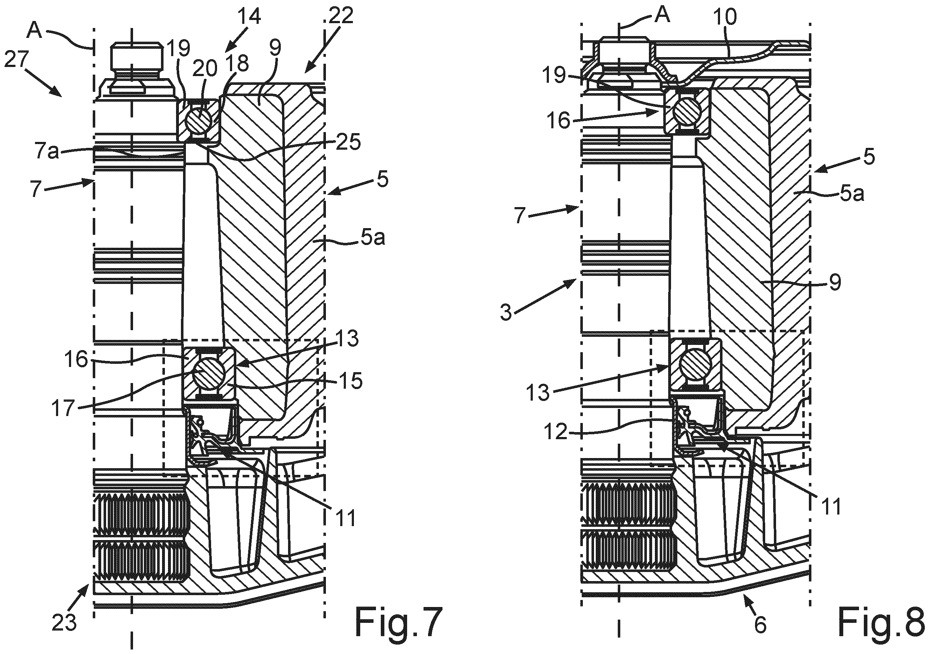

In dem Zusammenhang ist in Fig. 7 ein Montagezustand gezeigt, der im Hinblick auf die Montagephase zeitlich nach dem Montagezustand in Fig. 6 folgt. Das zweite Radialwälzlager 14 ist in Fig. 7 in der bereits verbauten Endposition gezeigt. Der Innenring 19 ist hier insbesondere mit einer Spielpassung mit der Außenseite des Wellenzapfens 7 verbunden. Vorteilhaft ist es in dem Zusammenhang, wie in Fig. 6 und Fig. 7 zu erkennen ist, dass radial orientierte Axialanschläge 7a und 25, einerseits an der Außenseite des Wellenzapfens 7, andererseits an der Innenseite des Lagergehäuses 9, ausgebildet sind. Insbesondere sind diese Axialanschläge 7a und 25 auf gleicher Axiallage angeordnet. Sie verjüngen den Aufnahmeraum 28 und begrenzen den Aufnahmeraum 28 in axialer Richtung zum ersten Radialwälzlager 13 hin. Damit ist auch die Eintauchtiefe des zweiten Radialwälzlagers 14 in den Aufnahmeraum 28 begrenzt und somit die Axiallage dieses zweiten Radialwälzlagers 14 mit Spiel vorgegeben.

Ausgehend von dem in Fig. 7 gezeigten Zwischenmontagezustand wird dann in einem weiteren nachfolgenden Montageschritt die Riemenscheibe 10 montiert, wie dies in Fig. 8 dargestellt ist. Dann ist die Baugruppe 3, wie sie auch in Fig. 2 bereits im zusammengebauten Zustand dargestellt und erläutert ist, fertiggestellt, wie dies auch in Fig. 8 gezeigt ist. Mit der Riemenscheibe 10 wird auch der Innenring 19 axial vorgespannt.

Die so gefertigte Baugruppe 3 wird dann in nachfolgenden Verfahrensschritten, bei welchem das Haushaltsgerät 1 gefertigt wird, bereitgestellt und in dem Gehäuse 2 verbaut.

### Bezugszeichenliste

- 1: Haushaltsgerät
- 2, 3: Baugruppe
- 4: Lageranordnung
- 5: Laugenbehälter
- 6: Wäschetrommel
- 7: Wellenzapfen
- 8: Tragarm
- 9: Lagergehäuse
- 10: Riemenscheibe
- 11: Dichtring
- 12: Metallteil
- 13: erstes Radialwälzlager
- 14: zweites Radialwälzlager
- 15, 18: Außenring
- 16, 19: Innenring
- 17, 20: Walzkörper
- 21: Werkzeug
- 22: Unterbaugruppe
- 23: Modul
- 24: Hubdorn
- 25: Anschlag
- 26: Einheit
- 27: Anordnung
- 28: Aufnahmeraum
- 29: Hilfswerkzeug
- A: Wellenachse

## Patentansprüche

1. Verfahren zur Montage einer Baugruppe (3) für ein Haushaltsgerät (1) zur Pflege von Wäschestücken, aufweisend folgende Schritte:
a) Bereitstellen eines Lagergehäuses (9) einer Lageranordnung (4) der Baugruppe (3) und Bereitstellen eines dazu separaten ersten Radialwälzlagers (13) der Lageranordnung (4);
b) Befestigen des ersten Radialwälzlagers (13) der Lageranordnung (4) an dem Lagergehäuse (9), insbesondere einer Innenseite des Lagergehäuses (9), mit einer Presspassung;
c) Bereitstellen einer Unterbaugruppe (22) mit einem Wellenzapfen (7) der Lageranordnung (4) und einer Wäschetrommel (6) der Baugruppe (3);
d) axiales Ineinanderführen von der Unterbaugruppe (22) und dem Modul (23), welches das Lagergehäuse (9) und das daran befestigte erste Radialwälzlager (13) aufweist, so dass das erste Radialwälzlager (13) mit einer Presspassung an dem Wellenzapfen (7) befestigt wird;
e) nachfolgend auf Schritt d) axiales Einführen eines zweiten Radialwälzlagers (14) in einen beim Ineinanderführen gemäß Schritt d) erzeugten Aufnahmeraum (28) zwischen dem Wellenzapfen (7) und dem Lagergehäuse (9) derart, dass das zweite Radialwälzlager (14) als Loslager erzeugt wird.

2. Verfahren nach Anspruch 1, wobei in Schritt e) ein Außenring (18) des zweiten Radialwälzlagers (14) mit einer, insbesondere radialen, Spielpassung zum radial außenliegend dazu angeordneten Lagergehäuse (9) angeordnet wird, so dass das Loslager gebildet wird.

3. Verfahren nach Anspruch 1 oder 2, wobei in Schritt e) ein Innenring (19) des zweiten Radialwälzlagers (14) mit einer Spielpassung an dem radial innenliegend dazu angeordneten Wellenzapfen (7) befestigt wird.

4. Verfahren nach einem der vorhergehenden Ansprüche, wobei in Schritt b) ein Außenring (15) des ersten Radialwälzlagers (13) mit einer Presspassung an dem radial dazu außenliegenden Lagergehäuse (9) befestigt wird.

5. Verfahren nach einem der vorhergehenden Ansprüche, wobei in Schritt d) ein Innenring (16) des ersten Radialwälzlagers (13) mit einer Presspassung an dem radial dazu innenliegenden Wellenzapfen (7) befestigt wird.

6. Verfahren nach einem der vorhergehenden Ansprüche, wobei in Schritt a) das erste Radialwälzlager (13) mit einem daran angeordneten Dichtring (11) in einer Montageposition gehalten wird und das Lagergehäuse (9), insbesondere mit einem daran befestigten Laugenbehälter (5) des Haushaltsgeräts (1), axial auf das erste Radialwälzlager (13) aufgeschoben wird, so dass die Presspassung erzeugt wird.

7. Verfahren nach einem der vorhergehenden Ansprüche, wobei in Schritt d) mit einem Hubdorn (24) einer Fertigungsanlage in axialer Richtung an einen Innenring (16) des ersten Radialwälzlagers (13) herangefahren wird, so dass in axialer Richtung nur der Innenring (16) mit dem Hubdorn (24) kontaktiert wird, und dann das Modul (23) durch axiales Bewegen des Hubdorns (24) mit der Unterbraugruppe (22) ineinander geführt wird.

8. Verfahren nach einem der vorhergehenden Ansprüche, wobei das erste Radialwälzlager (13) als trommelseitiges Radialwälzlager montiert wird.

9. Verfahren nach einem der vorhergehenden Ansprüche, wobei nach Schritt e) eine Riemenscheibe (10) der Baugruppe (2) an dem Wellenzapfen (7) benachbart zu dem zweiten Radialwälzlager (14) fest montiert wird, so dass das zweite Radialwälzlager (14) als ein riemenscheibenseitiges Radialwälzlager (14) angeordnet wird, insbesondere so, dass das zweite Radialwälzlager (14), insbesondere ein Innenring (19) des zweiten Radialwälzlagers (14), in axialer Richtung mit der Riemenscheibe (10) verspannt wird.

10. Verfahren zur Montage eines Haushaltsgeräts (1) zur Pflege von Wäschestücken,, bei welchem eine gefertigte Baugruppe (3) nach einem der vorhergehenden Ansprüche verbaut wird.

11. Verfahren nach Anspruch 10, wobei ein Riemen eines Riemenantriebs des Haushaltsgeräts (1) mit der Riemenscheibe (10) verspannt wird, so dass der Außenring (18) des zweiten Radialwälzlagers (14) zusätzlich an das radial außenliegend dazu angeordnete Lagergehäuse (9) aber nur über einen Azimutalabschnitt kleiner einem vollen Umlauf um die Wellenachse (A) angedrückt wird.

12. Haushaltsgerät (1) zur Pflege von Wäschestücken, mit einer Lageranordnung (4) und mit einer Wäschetrommel (6) sowie einer Riemenscheibe (10), die an einem Wellenzapfen (7) der Lageranordnung (4) befestigt sind, wobei die Lageranordnung (4) ein erstes Radialwälzlager (13) und ein dazu separates zweites Radialwälzlager (14) aufweist, wobei das erste Radialwälzlager (13) in axialer Richtung des Wellenzapfens (7) näher zur Wäschetrommel (6) angeordnet ist als das zweite Radialwälzlager (14) und das zweite Radialwälzlager (14) in axialer Richtung des Wellenzapfens (7) näher zur Riemenscheibe (10) angeordnet ist, als das erste Radialwälzlager (13), **dadurch gekennzeichnet, dass** das riemenscheibenseitige zweite Radialwälzlager (14) ein Loslager ist und das trommelseitige erste Radialwälzlager (13) ein Festlager ist.

13. Haushaltsgerät (1) nach Anspruch 12, **dadurch gekennzeichnet, dass** die Radialwälzlager (13, 14) jeweils einen Innenring (16, 19) und einen Außenring (15, 18) aufweisen und dazwischen kugelförmige Wälzkörper (17, 20) angeordnet sind, wobei der Außenring (18) des riemenscheibenseitigen zweiten Radialwälzlagers (14) mit einer Spielpassung zu einem Lagergehäuse (9) der Lageranordnung (4) angeordnet ist, so dass dadurch das Loslager gebildet ist.

14. Haushaltsgerät (1) nach Anspruch 12 oder 13, **dadurch gekennzeichnet, dass** die Radialwälzlager (13, 14) jeweils einen Innenring (16, 19) und einen Außenring (15, 18) aufweisen und dazwischen kugelförmige Wälzkörper (17, 20) angeordnet sind, wobei der Innenring (19) des riemenscheibenseitigen zweiten Radialwälzlagers (14) mit einer Spielpassung an dem Wellenzapfen (7) angeordnet ist.

15. Haushaltsgerät (1) nach einem der vorhergehenden Ansprüche, **dadurch gekennzeichnet, dass** die Radialwälzlager (13, 14) jeweils einen Innenring (16, 19) und einen Außenring (15, 18) aufweisen und dazwischen kugelförmige Wälzkörper (17, 20) angeordnet sind, wobei der Außenring (15) des trommelseitigen ersten Radialwälzlagers (13) mit einer Presspassung an dem Lagergehäuse (9) der Lageranordnung (4) angeordnet ist, und der Innenring (16) des trommelseitigen ersten Radialwälzlagers (13) mit einer Presspassung an dem Wellenzapfen (7) angeordnet ist, so dass durch die Presspassungen das Festlager gebildet ist.
